# EUROPEAN PATENT SPECIFICATION

(11) **EP 4 027 231 B1**
(45) Date of publication and mention of the grant of the patent: **22.10.2025**
(21) Application number: 20869312.7
(22) Date of filing: 24.09.2020
(51) Int. Cl.: G06F 3/04883, G06F 1/16, G06F 3/04886

(54) **INTERFACE SWITCHING METHOD AND ELECTRONIC DEVICE**
SCHNITTSTELLENUMSCHALTVERFAHREN UND ELEKTRONISCHE VORRICHTUNG
PROCÉDÉ DE COMMUTATION D'INTERFACE ET DISPOSITIF ÉLECTRONIQUE

(30) Priority: 25.09.2019 CN 201910910685
(43) Date of publication of application: 13.07.2022
(73) Proprietor: Huawei Technologies Co., Ltd., Shenzhen, Guangdong 518129 (CN)
(72) Inventor: ZHAO, Wei, Shenzhen, Guangdong 518129 (CN)
(74) Representative: Pfenning, Meinig & Partner mbB
(86) International application number: PCT/CN2020/117552
(87) International publication number: WO 2021/057868

(56) References cited:
- EP-A1- 2 977 850
- EP-A1- 3 159 784
- WO-A1-2018/017044
- CN-A- 104 615 374
- CN-A- 104 615 374
- CN-A- 105 830 351
- CN-A- 107 870 716
- CN-A- 110 072 008
- CN-A- 110 119 295
- CN-A- 110 825 301
- US-A1- 2013 145 311
- US-A1- 2016 313 966
- US-A1- 2017 221 456

## Description

### TECHNICAL FIELD

This application relates to the field of terminal display technologies, and in particular, to an interface switching method, an electronic device and a computer-readable storage medium.

### BACKGROUND

Document EP 3 159 784 A1 discloses an electronic device having a bended display and a control method thereof.

Document US 2017/221456 A1 discloses a method for running functions according to the transformation of the display of an electronic device.

In a process of using an electronic device such as a mobile phone or a tablet computer, a user interface (user interface, UI) of the electronic device often needs to be switched. Currently, system-level interface switching includes switching an interface currently displayed by the electronic device to a previous-level interface, switching the interface currently displayed by the electronic device to a multi-task management interface, or switching the interface currently displayed by the electronic device to a system desktop. In this specification, "user interface" and "interface" have a same meaning and can be used interchangeably.

In a conventional interface switching manner, a virtual key or an entity key that is used to implement an interface switching function may be disposed at a lower part of a screen. The user may perform an operation on the key to trigger the electronic device to be switched from a currently displayed interface to another interface. In this manner, there are problems that intelligence is low and user experience is affected.

### SUMMARY

Embodiments of this application provide an interface switching method, an electronic device and a computer-readable storage medium according to the independent claims, to conveniently switch user interfaces of the electronic device and improve user experience.

The foregoing objective and another objective are achieved based on features in the independent claims. Further implementations are provided in the dependent claims, the specification, and the accompanying drawings.

According to a first aspect, an embodiment of this application provides an interface switching method, applied to an electronic device having a display and a side touch area, where the method includes: when a first interface is displayed on the display of the electronic device, detecting a touch operation performed in the side touch area, and switching the first interface to a second interface for displaying on the display in response to the touch operation. Further, the display comprises a first display area, a second display area, and a third display area that are foldable, and the first display area and the second display area are connected in a foldable manner by using the third display area; when the first display area and the second display area are folded to a state in which an included angle is less than or equal to a preset angle, the third display area comprises the side touch area, and the first interface or the second interface obtained after switching is displayed in the first display area or the second display area; and when the electronic device is in an unfolded state, the side touch area is disposed in a boundary area of the first display area and/or a boundary area of the second display area.

In the foregoing method, a user may trigger switching of user interfaces on the display of the electronic device by using the side touch area of the electronic device. This is relatively intelligent and facilitates a user operation, so that user experience can be improved.

The display includes a first display area, a second display area, and a third display area that are foldable, and the first display area and the second display area are connected in a foldable manner by using the third display area; and when the first display area and the second display area are folded to a state in which an included angle is less than or equal to a preset angle, the third display area includes the side touch area, and the first interface or the second interface obtained after switching is displayed in the first display area or the second display area. In this method, a foldable display area included on a foldable display provides the side touch area. In one aspect, each area on the foldable display can be properly used, and in addition, the touch area is disposed on a side edge. Because the user habitually holds the side edge of the electronic device, this method may adapt to a habit of the user, so that user experience is improved.

In a possible design, which is not an embodiment of the present invention but helpful for understanding certain aspects thereof, the display includes a main display on a front side of the electronic device and a secondary display area on a side edge of the electronic device, and the main display and the secondary display area are connected as a whole; and the secondary display area includes the side touch area, and the first interface or the second interface obtained after switching is displayed on the main display. In this method, a secondary display area included on a curved display provides the side touch area. In one aspect, each area on the curved display can be properly used, and in addition, the touch area is disposed on the side edge. Because the user habitually holds the side edge of the electronic device, this method may adapt to a habit of the user, so that user experience is improved.

In a possible design, the touch operation may include a slide operation, a touch and hold operation, a tap operation, or a double tap operation.

In a possible design, the first interface and the second interface may be different interfaces of a same application, and the second interface is a previous-level interface of the first interface; or the first interface may be an interface of an application, and the second interface may be a system desktop or a multi-task management interface.

In a possible design, the second interface is the multi-task management interface, and the multi-task management interface includes an application list of at least one application that is currently run by the electronic device in the background and the foreground. Based on this design, after the first interface is switched to the second interface for displaying on the display, if a slide operation performed in the side touch area is detected, content of each entry in the application list may be scrolled for displaying on the display in response to the slide operation. In this method, when the multi-task management interface is displayed on the display, scroll display of the application list in the multi-task management interface on the display may further be triggered by using the touch operation such as the slide operation in the side touch area. This facilitates a user operation, so that user experience can be improved.

In a possible design, if the display is currently in a screen split state, the first interface is displayed in a first area of the display, and a third interface is displayed in a second area of the display, based on this design, the switching the first interface to a second interface for displaying on the display in response to the touch operation includes: switching, in the first area, the first interface to the second interface for displaying in response to the touch operation, and keeping the third interface being displayed in the second area. In this method, when the display is in the screen split state, the user can conveniently trigger interface switching of a part of a display area by using the side touch area of the electronic device, so that user experience can be improved.

According to a second aspect, an embodiment of this application further provides an electronic device. The electronic device may include a display and a side touch area, one or more processors, and one or more memories. The one or more memories store one or more computer programs, and the one or more computer programs include instructions. When the instructions are executed by the one or more processors, the electronic device is enabled to perform the technical solution in the first aspect and any possible design of the first aspect. Further, the display comprises a first display area, a second display area, and a third display area that are foldable, and the first display area and the second display area are connected in a foldable manner by using the third display area; when the first display area and the second display area are folded to a state in which an included angle is less than or equal to a preset angle, the third display area comprises the side touch area, and the first interface or the second interface obtained after switching is displayed in the first display area or the second display area; and when the electronic device is in an unfolded state, the side touch area is disposed in a boundary area of the first display area and/or a boundary area of the second display area.

According to a third aspect, an embodiment of this application further provides an electronic device. The electronic device includes modules/units that perform the method in any one of the first aspect or the possible designs of the first aspect. These modules/units may be implemented by hardware, or may be implemented by hardware by executing corresponding software.

According to a fourth aspect, an embodiment of this application further provides a chip. The chip is coupled to a memory in an electronic device, and performs the technical solution in any one of the first aspect of the embodiments of this application or the possible designs of the first aspect. In this embodiment of this application, "coupling" means that two components are directly or indirectly connected to each other.

According to a fifth aspect, an embodiment of this application further provides a computer-readable storage medium. The computer-readable storage medium includes a computer program. When the computer program is run on an electronic device, the electronic device is enabled to perform the technical solution in any one of the first aspect of the embodiments of this application or the possible designs of the first aspect.

According to a sixth aspect, an example further provides a computer program product. When the computer program product runs on an electronic device, the electronic device is enabled to perform the technical solution in any one of the first aspect of the embodiments of this application or the possible designs of the first aspect.

According to a seventh aspect, an example further provides a graphical user interface on an electronic device. The electronic device has a display, a side touch area, one or more memories, and one or more processors. The one or more processors are configured to execute one or more computer programs stored in the one or more memories, and the graphical user interface includes an interface displayed when the electronic device performs the technical solution in the first aspect in the embodiments of this application and any possible design of the first aspect.

### BRIEF DESCRIPTION OF DRAWINGS

FIG. 1 is a schematic diagram of a structure of a mobile phone to which this application is applicable;
FIG. 2 is a schematic diagram of a software structure of an electronic device according to an embodiment of this application;
FIG. 3 is a schematic flowchart of an interface switching method according to an embodiment of this application;
FIG. 4 is a schematic diagram of a mobile phone with a curved screen according to an embodiment of this application, which is not an embodiment of the present invention but helpful for understanding certain aspects thereof;
FIG. 5(a) to FIG. 5(d) are schematic diagrams of a plurality of physical forms of a mobile phone with a foldable display according to an embodiment of this application;
FIG. 6(a) to FIG. 6(c) are a schematic flowchart of an interface switching method according to an embodiment of this application;
FIG. 7(a) to FIG. 7(c) are a schematic flowchart of an interface switching method according to an embodiment of this application;
FIG. 8(a) to FIG. 8(c) are a schematic flowchart of an interface switching method according to an embodiment of this application;
FIG. 9(a) to FIG. 9(c) are a schematic flowchart of an interface switching method according to an embodiment of this application;
FIG. 10(a) to FIG. 10(c) are a schematic flowchart of an interface switching method according to an embodiment of this application;
FIG. 11 is a schematic flowchart of an interface switching method according to an embodiment of this application; and
FIG. 12 is a schematic diagram of a structure of an electronic device according to an embodiment of this application.

### DESCRIPTION OF EMBODIMENTS

The following describes in detail the technical solutions in the embodiments of this application with reference to the accompanying drawings in the embodiments of this application.

The following explains some terms in the embodiments of this application, to help understanding of a person skilled in the art.
(1) An application (application, app) program in the embodiments of this application may be referred to as an application for short, and is a software program that can implement one or more specific functions. Generally, a plurality of applications may be installed on an electronic device, for example, an instant messaging application, a video application, an audio application, and an image shooting application. The instant messaging application may be, for example, a "Messages" application, WeChat (WeChat), WhatsApp Messenger, LINE (Line), Instagram (instagram), Kakao Talk, and DingTalk. The image shooting application may include, for example, a camera application (a system camera or a third-party camera application). The video application may include, for example, YouTube, Twitter, TikTok, iQIYI, and Tencent Video. The audio application may include, for example, KuGou, EMUMO, and QQ music. The application in the following embodiments may be an application installed before delivery of the electronic device, or may be an application downloaded from a network or obtained from another electronic device by a user in a process of using the electronic device.
(2) A user interface, also referred to as a user interface, is an interface that provides user information and interaction (interact). The user interface may be provided by a device or may be provided by a third-party application installed on the device. An objective of the user interface is to enable a user to conveniently and effectively operate hardware to implement bidirectional interaction and complete work expected to be completed by using the hardware. The user interface includes: a graphical user interface (graphic user interface, GUI), for example, an interface displayed when a mobile phone is in a powered-on state, where the user interacts with hardware of the device by using a displayed icon; a characterized user interface, for example, a user interface that has a character and that is obtained after programming by using a computer language; and a physical character interface, that is, a physical control (such as a volume key, a camera key, a power-on key, or an unlock key) that is one of the ways of interaction and information exchange between a system and the user. In the embodiments of this application, the graphical user interface is mainly used as an example of the user interface to describe the technical solutions in the embodiments of this application.
(3) A foldable screen device is an intelligent terminal device that includes a flexible screen that can be folded.
(4) A curved screen device is an intelligent terminal device that includes a curved screen whose both ends can be extended to a front part or a back part.
(5) A touch and hold gesture means that a finger presses and holds a screen and is not lifted, and is lifted after specific duration. A slide gesture means that a finger is lifted after moving by a specific distance from a touch position.

The following describes the solutions provided in the embodiments of this application.

In a process of using an electronic device such as a mobile phone or a tablet computer, a user often needs to switch a user interface currently displayed by the electronic device. Currently, system-level interface switching includes switching the interface currently displayed by the electronic device to a previous-level interface, switching the interface currently displayed by the electronic device to a multi-task management interface, or switching the interface currently displayed by the electronic device to a system desktop. In addition to the system-level interface switching, there is also application-level interface switching. The application-level interface switching means switching from an interface A of a specific application to an interface B. For example, for a WeChat application, a chat interface of WeChat may be switched to a home page or a Moments interface of WeChat. For the application-level switching interface, the user may perform switching based on prompt information in a current interface of the application. The system-level switching is mainly involved in this application. Certainly, this application may be applied not only to the system-level interface switching, but also to the application-level interface switching. This is not limited.

In a conventional interface switching manner, a virtual navigation key or an entity key that is used to implement an interface switching function is disposed at a lower part of a screen. The user may perform an operation on the key to trigger the electronic device to switch from a currently displayed interface to a system desktop, a previous-level interface, or a multi-task management interface. The conventional interface switching manner is not convenient for some new electronic devices (for example, a curved screen device or a foldable screen device). For example, for the curved screen device, because a screen is relatively large and a part of the screen is bent, it is quite difficult for the user to perform an operation on a virtual navigation key or an entity key on the screen by using a single hand, and in this case, interface switching is not intelligent enough. Similarly, for the foldable screen device, because a screen is relatively large, it is also quite difficult for the user to perform an operation on a virtual navigation key or an entity key on the screen by using a single hand, and in this case, interface switching is not intelligent enough, and user experience is therefore affected.

In view of the foregoing problems, an embodiment of this application provides an interface switching method. The method may be applied to any electronic device having a display and a side touch area, such as a mobile phone, a tablet computer, a wearable device with a wireless communications function (such as a smartwatch, a band, or a smart helmet), a vehicle-mounted device, a smart household, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). In the interface switching method provided in the embodiment of this application, a user may perform a touch operation by using the side touch area, and when the electronic device displays a first interface on the display, the touch operation performed in the side touch area is detected, and the first interface is switched to a second interface for displaying on the display in response to the touch operation, so that the interface of the electronic device can be switched. In this method, the user may perform, in the side touch area of the electronic device, a touch operation for switching a user interface, and does not need to perform an operation on a virtual navigation key or an entity key. Because the user is used to hold the electronic device by using a hand to perform the touch operation, in this method, the user can conveniently perform the touch operation in the side touch area of the electronic device even if the user operates the electronic device by using a single hand. In this way, it is more convenient to switch the interface, and user experience can be improved.

In some embodiments, the electronic device may be an electronic device with a curved screen, the curved screen includes a main display on a front side of the electronic device and a secondary display area on a side edge of the electronic device, and the main display and the secondary display area are connected to form the curved screen. Based on these instances, the side touch area may be disposed in a secondary display area, and the first interface or the second interface obtained after switching may be displayed on the main display. In some other embodiments, the electronic device may alternatively be an electronic device with a foldable display, the foldable display may include a first display area, a second display area, and a third display area that are foldable, and the first display area and the second display area are connected by using the third display area in a foldable manner. Based on these instances, when the first display area and the second display area are folded to be less than or equal to a preset angle, the side touch area may be disposed in the third display area. For example, the electronic device is a foldable screen mobile phone. When the foldable screen mobile phone is in a folded state, a bent display area on a foldable screen may be used as the side touch area, and based on these instances, the first interface or the second interface obtained after switching may be further displayed in the first display area or the second display area. It should be noted that the interface switching method provided in the embodiment of this application may be applied to any electronic device with a display, and the electronic devices are not listed in the embodiment of this application.

The following uses an example in which the method provided in this application is applied to a mobile phone with a display for description.

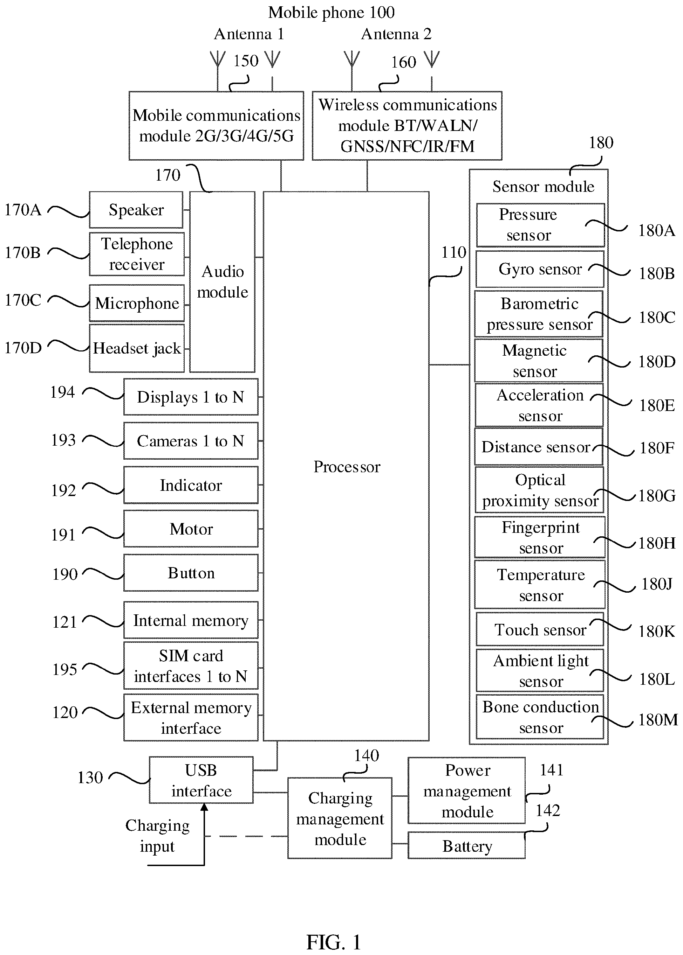

For example, FIG. 1 is a schematic diagram of a structure of a mobile phone to which this application is applicable.

As shown in FIG. 1, the electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a telephone receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural network processing unit (neural-network processing unit, NPU). Different processing units may be independent components, or may be integrated into one or more processors. The controller may be a nerve center and a command center of the mobile phone. The controller may generate an operation control signal based on an instruction operation code and a time sequence signal, to control instruction reading and instruction execution. A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. Repeated access can be avoided, and waiting time of the processor 110 can be reduced, and therefore efficiency of a system can be improved.

The USB interface 130 is an interface that conforms to a USB standard specification, and may be specifically a mini USB interface, a micro USB interface, a USB Type C interface, or the like. The USB interface 130 may be configured to connect to a charger to charge the mobile phone, or may be configured to transmit data between the mobile phone and a peripheral device. The charging management module 140 is configured to receive a charging input from the charger. The power management module 141 is configured to be connected to the battery 142, and the power management module 141 receives an input from the battery 142 and/or the charging management module 140, and supplies power to the processor 110, the internal memory 121, an external memory, the display 194, the camera 193, the wireless communications module 160, and the like.

A wireless communications function of the mobile phone may be implemented by the antenna 1, the antenna 2, the mobile communications module 150, the wireless communications module 160, the modem processor, the baseband processor, and the like. The antenna 1 and the antenna 2 are configured to transmit and receive electromagnetic wave signals. Each antenna in the mobile phone may be configured to cover one or more communications bands. Different antennas may further be multiplexed, to improve antenna utilization. For example, the antenna 1 may be multiplexed as a diversity antenna in a wireless local area network. In some other embodiments, the antenna may be used in combination with a tuning switch.

The mobile communications module 150 may provide a wireless communications solution that includes 2G/3G/4G/5G or the like and that is applied to the mobile phone. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transmit a processed electromagnetic wave to a modem processor for demodulation. The mobile communications module 150 may further amplify a signal modulated by the modem processor, and convert the signal into an electromagnetic wave for radiation through the antenna 1. In some embodiments, at least some function modules of the mobile communications module 150 may be disposed in the processor 110. In some embodiments, at least some function modules of the mobile communications module 150 and at least some modules of the processor 110 may be disposed in a same component.

The wireless communications module 160 may provide a wireless communications solution that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, or the like and that is applied to the mobile phone. The wireless communications module 160 may be one or more components integrating at least one communications processing module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave for radiation through the antenna 2.

In some embodiments, the antenna 1 and the mobile communications module 150 of the mobile phone are coupled, and the antenna 2 and the wireless communications module 160 of the mobile phone are coupled, so that the mobile phone can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS) and/or satellite based augmentation systems (satellite based augmentation systems, SBAS).

The display 194 is configured to display a display interface of an application, and the like. The display 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro- LED, a micro-OLED, a quantum dot light emitting diode (quantum dot light emitting diode, QLED), or the like. In some embodiments, the mobile phone may include one or N displays 194, where N is a positive integer greater than 1. It can be learned from the foregoing examples that the display 194 herein in this embodiment of this application may be a curved screen (in other words, the screen may further cover a side part of the mobile phone in addition to a home screen, for example, mainly covers a left side part and a right side part of the mobile phone), or may be a foldable screen (in other words, the display may be unfolded or folded based on a use requirement).

The camera 193 is configured to capture a static image or a video. In some embodiments, the camera 193 may include at least one camera, for example, one front-facing camera and one rear-facing camera.

The internal memory 121 may be configured to store computer-executable program code. The executable program code includes instructions. The processor 110 runs the instructions stored in the internal memory 121, to execute various function applications of the mobile phone and data processing. The internal memory 121 may include a program storage area and a data storage area. The program storage area may store an operating system, software code of at least one application (such as an iQIYI application or a WeChat application), and the like. The data storage area may store data (for example, an image or a video) generated in a process of using the mobile phone. In addition, the internal memory 121 may include a high-speed random access memory, and may further include a nonvolatile memory such as at least one magnetic disk storage device, a flash memory, or a universal flash storage (universal flash storage, UFS).

The external memory interface 120 may be configured to connect to an external storage card such as a micro SD card, to extend a storage capability of the mobile phone. The external storage card communicates with the processor 110 through the external memory interface 120, to implement a data storage function. For example, a file such as an image or a video is stored in the external storage card.

The mobile phone may implement an audio function such as music playing or recording by using the audio module 170, the speaker 170A, the telephone receiver 170B, the microphone 170C, the headset jack 170D, the application processor, and the like.

The sensor module 180 may include a pressure sensor 180A, a gyro sensor 180B, a barometric pressure sensor 180C, a magnetic sensor 180D, an acceleration sensor 180E, a range sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. In some embodiments, the pressure sensor 180A may be disposed on the display 194. The gyro sensor 180B may be configured to determine a moving posture of the mobile phone. In some embodiments, angular velocities of the mobile phone around three axes (namely, an x-axis, a y-axis, and a z-axis) may be determined by using the gyro sensor 180B.

The gyro sensor 180B may be configured to perform image stabilization during photographing. The barometric pressure sensor 180C is configured to measure barometric pressure. In some embodiments, the mobile phone calculates an altitude by using the barometric pressure measured by the barometric pressure sensor 180C, to assist in positioning and navigation. The magnetic sensor 180D includes a Hall sensor. The mobile phone may detect opening and closing of a flip cover by using the magnetic sensor 180D. In some embodiments, when the mobile phone is a flip phone, the mobile phone may detect opening/closing of a flip cover based on the magnetic sensor 180D. Further, a feature such as automatic unlocking upon opening of the flip cover is set based on a detected opening or closing state of the flip cover. The acceleration sensor 180E may detect magnitude of an acceleration of the mobile phone in each direction (generally three axes). When the mobile phone is still, a value and a direction of gravity may be detected. The acceleration sensor 180E may be further configured to identify a posture of the electronic device, and is used in an application such as switching between landscape mode and portrait mode or a pedometer.

The distance sensor 180F is configured to measure a distance. The mobile phone may measure a distance through infrared light or a laser. In some embodiments, in a photographing scenario, the mobile phone may measure a distance by using the distance sensor 180F, to implement fast focusing. The optical proximity sensor 180G may include, for example, a light emitting diode (LED) and an optical detector such as a photodiode. The light-emitting diode may be an infrared light-emitting diode. The mobile phone emits infrared light by using the light-emitting diode. The mobile phone detects infrared reflected light from a nearby object by using a photodiode. When sufficient reflected light is detected, it may be determined that there is an object near the mobile phone. When insufficient reflected light is detected, the mobile phone may determine that there is no object near the mobile phone. The mobile phone may detect, by using the optical proximity sensor 180G, that the user holds the mobile phone close to an ear to make a call, so as to automatically turn off a screen for power saving. The optical proximity sensor 180G may also be used in a smart cover mode or a pocket mode to automatically unlock or lock the screen.

The ambient light sensor 180L is configured to sense ambient light brightness. The mobile phone may adaptively adjust brightness of the display 194 based on the sensed brightness of the ambient light. The ambient light sensor 180L may also be configured to automatically adjust a white balance during photographing. The ambient light sensor 180L may also cooperate with the optical proximity sensor 180G to detect whether the mobile phone is in a pocket to prevent an accidental touch. The fingerprint sensor 180H is configured to collect a fingerprint. The mobile phone may use a feature of the collected fingerprint to implement fingerprint-based unlocking, application access locking, fingerprint-based photographing, fingerprint-based call answering, and the like.

The temperature sensor 180J is configured to detect a temperature. In some embodiments, the mobile phone executes a temperature processing policy based on the temperature detected by the temperature sensor 180J. For example, when the temperature reported by the temperature sensor 180J exceeds a threshold, the mobile phone lowers performance of a processor near the temperature sensor 180J, to reduce power consumption for thermal protection. In some other embodiments, when the temperature is less than another threshold, the mobile phone heats the battery 142 to prevent the mobile phone from being shut down abnormally because of a low temperature. In some other embodiments, when the temperature is less than still another threshold, the mobile phone boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor 180K. The touch sensor may transfer the detected touch operation to the application processor, to determine a type of a touch event. A visual output related to the touch operation may be provided on the display 194. In some other embodiments, the touch sensor 180K may alternatively be disposed on a surface of the mobile phone and is at a location different from that of the display 194.

The bone conduction sensor 180M may obtain a vibration signal. In some embodiments, the bone conduction sensor 180M may obtain a vibration signal of a vibration bone of a human vocal part. The bone conduction sensor 180M may also be in contact with a human pulse, to receive a blood pressure beating signal.

The button 190 includes a power button, a volume button, and the like. The button 190 may be a mechanical button, or may be a touch button. The mobile phone receives a button input, and generates a button signal input related to a user setting and function control of the mobile phone. The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effects. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with and separation from the mobile phone.

It may be understood that the components shown in FIG. 1 do not constitute a specific limitation on a mobile phone. The mobile phone may further include more or fewer components than those shown in FIG. 1, or some components may be combined, or some components may be split, or different component arrangements may be used. In the following embodiments, the mobile phone shown in FIG. 1 is used as an example for description.

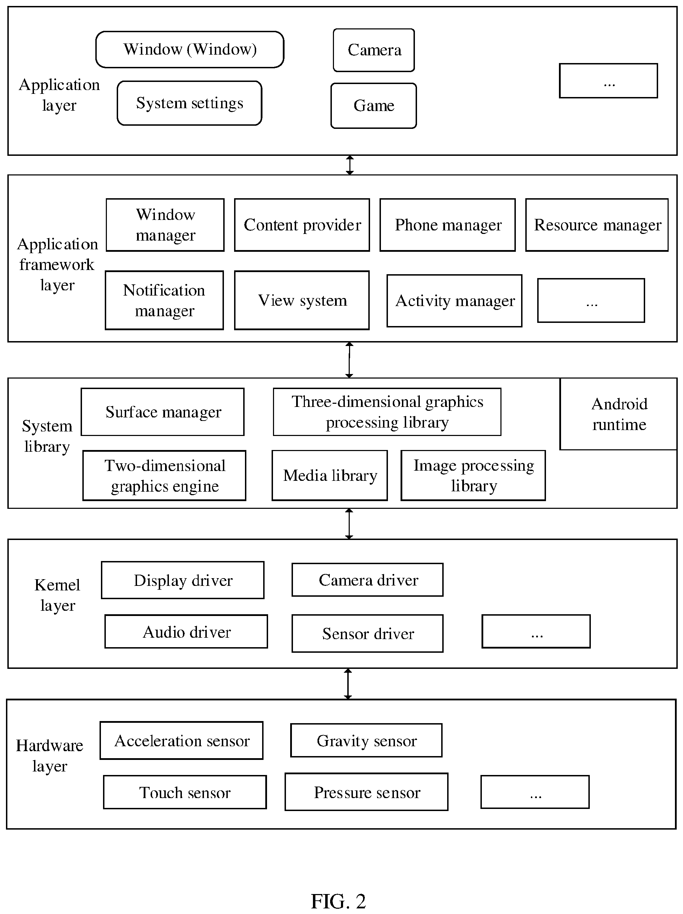

FIG. 2 is a block diagram of a software structure of an electronic device according to an embodiment of this application. As shown in FIG. 2, the software structure of the electronic device may be a layered architecture. For example, software may be divided into several layers, and each layer has a clear role and responsibility. The layers communicate with each other through a software interface. In some embodiments, the Android system is divided into four layers: an application (application) layer (which may be referred to as an "APP layer" for short), an application framework layer (framework, FWK), an Android runtime (Android runtime) and system library layer (which may also be described as a system runtime library layer), and a kernel layer from top to bottom.

At least one application is run in the application layer. These applications may be a window (Window) program, a system setting program, a contact program, a short message program, a clock program, a camera program, or the like that is included in an operating system, or may be an application developed by a third-party developer, such as an instant messaging program (such as WeChat or QQ), a photo beautification program (such as Meitu or BeautyCam), or a game program. Certainly, in specific implementation, an application package in the application layer is not limited to the foregoing examples, and actually may further include another application package. This is not limited in this embodiment of this application.

The application framework layer provides an application programming interface (application programming interface, API) and a programming framework for an application in the application layer. The application framework layer may include some predefined functions. The application framework layer is equivalent to a processing center, and this center determines to enable the application in the application layer to perform a corresponding operation. As shown in FIG. 2, the application framework layer may include a window manager, a content provider, a view system, a phone manager, a resource manager, a notification manager, an activity manager, and the like. Certainly, in specific implementation, the application framework layer may further include another component. This is not limited in this embodiment of this application.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and received, a browsing history and bookmarks, a phone book, and the like.

The view system may include a visual control, for example, a control for displaying text or a control for displaying a picture. The view system may be configured to construct an application. A display interface may include one or more views. For example, a display interface including an SMS message notification icon may include a text display view and a picture display view.

The phone manager may be configured to provide a communications function of a mobile phone 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The displayed notification information may automatically disappear after a short pause without user interaction. For example, the notification manager is configured to notify download completion, provide a message notification, and the like. The notification manager may further be a notification that appears in a top status bar of the system in a form of a graph or a scroll bar text, for example, a notification of an application running on the background or a notification that appears on the screen in a form of a dialog window. For example, text information is displayed in the status bar, an announcement is produced, the electronic device vibrates, or the indicator light blinks.

The activity manager may be configured to manage a lifecycle of each application and a common navigation backoff function, for example, control an application to exit (including switching a user interface currently displayed on a display to a system desktop), open, or back off (including switching the user interface currently displayed on the display to a previous-level user interface of the user interface currently displayed on the display).

The Android runtime includes a kernel library and a virtual machine. The Android runtime is responsible for scheduling and management of the Android system.

The core library includes two parts: a function that needs to be invoked in Java language and a core library of Android. The application layer and the application framework layer run on the virtual machine. The virtual machine executes Java files in the application layer and the application framework layer as binary files. The virtual machine is configured to implement functions such as object lifecycle management, stack management, thread management, security and exception management, and garbage collection.

The system library may include a plurality of functional modules, such as a surface manager (surface manager), a media library (media libraries), a three-dimensional graphics processing library (for example, OpenGL ES), and a 2D graphics engine (for example, SGL). The surface manager is configured to manage a display subsystem and provide fusion of 2D and 3D layers for a plurality of applications. The media library supports playing and recording in a plurality of commonly used audio and video formats, static image files, and the like. The media library may support a plurality of audio and video coding formats, for example, MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing. In addition, the system library may further include a form detection module, configured to identify a physical form of the electronic device. For example, the form detection module may be configured to determine the physical form of the electronic device based on sensor data uploaded by various types of sensors at a hardware layer. The physical form may include a folded form, an unfolded form, a half-folded form with a specific angle, and the like. The system library may further include a coordinate mapping module, configured to record first position coordinates of a first display area/control on a side screen and second position coordinates of a second display area/control on a main screen/sub screen, and construct a mapping relationship between the first position coordinates and the second position coordinates.

The kernel layer is a layer between hardware and software. The kernel layer may include a display driver, a camera lens driver, an audio driver, and a sensor driver.

In addition, the Android system may further include a hardware layer. The hardware layer may include various sensors such as a pressure sensor, an acceleration sensor, a gyro sensor, a touch sensor, a fingerprint sensor, and a temperature sensor.

In this application, a software program and/or module corresponding to a software architecture in FIG. 2 may be stored in the internal memory 121 in the mobile phone 100 shown in FIG. 1.

A specific implementation process of the interface switching method provided in the embodiments of the present invention is described in detail with reference to the hardware architecture of the electronic device shown in FIG. 1 and the software architecture shown in FIG. 2. It should be noted that "/" in this application represents "or" unless otherwise stated. For example, A/B may represent A or B; "and/or" in this application merely describes an association relationship of associated objects, and indicates that there may be three relationships. For example, A and/or B may represent that there are three cases: There is only A, there are both A and B, and there is only B. "At least one" means one or more, and "a plurality of" means two or more. In this application, "example", "in some embodiments", "in some other embodiments", or the like is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner. In addition, terms such as "first" and "second" in this application are merely used for distinction and description, and cannot be understood as an indication or implication of relative importance or implicit indication of a quantity of indicated technical features, or an indication or implication of a sequence.

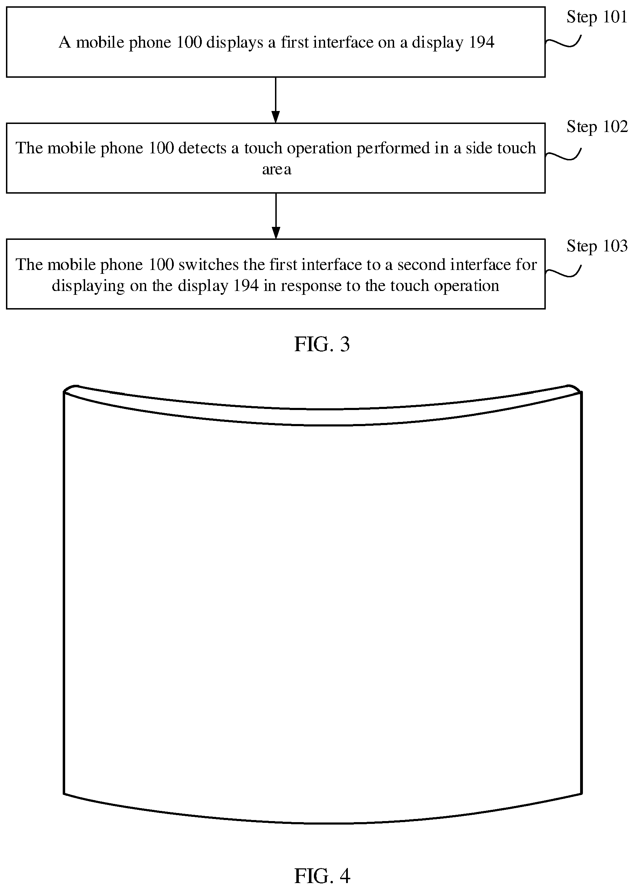

For example, FIG. 3 is a schematic flowchart of an interface switching method according to an embodiment of this application. The method may be applied to an electronic device that has a display and a side touch area. In FIG. 3, for example, the electronic device is the mobile phone 100 shown in FIG. 1, and a software structure of the mobile phone 100 is the structure shown in FIG. 2, to describe the interface switching method provided in this embodiment of this application in detail. The method includes the following steps.

Step 101: The mobile phone 100 displays a first interface on a display 194.

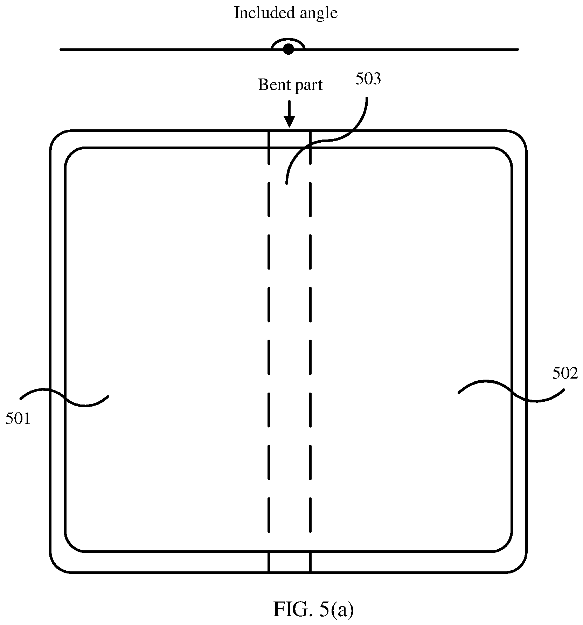

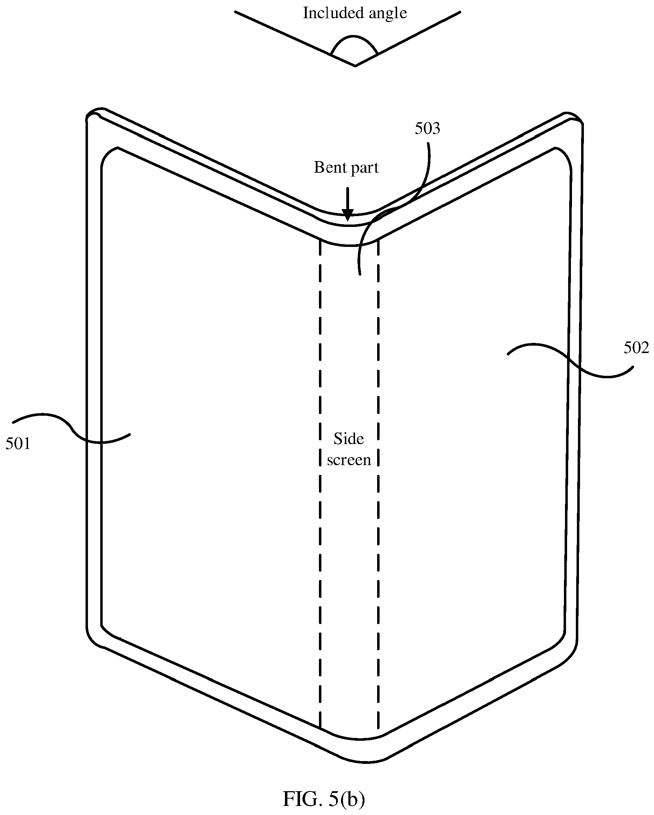

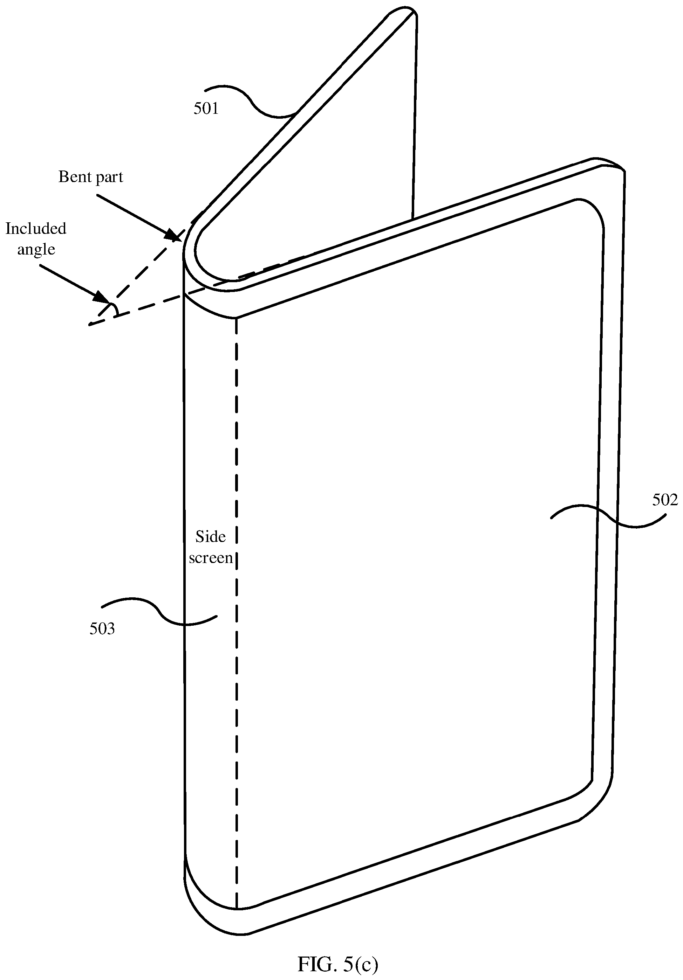

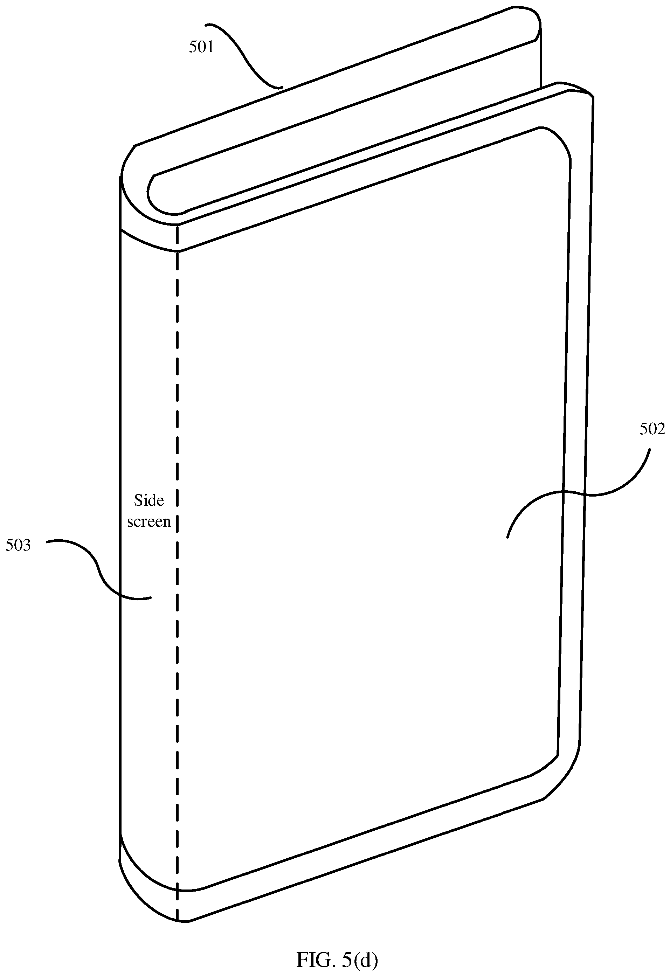

In this application, the display 194 may be a curved screen or a foldable display. For example, FIG. 4 is a schematic diagram of a structure of a mobile phone with a curved screen. FIG. 4 shows an example in which the curved screen is a curved screen that is bent outwards. In some other embodiments, the curved screen may alternatively be a curved screen that is bent inwards. In an example, the curved screen may include a main display on a front side of the mobile phone 100 and a secondary display area on a side edge of the mobile phone 100, and the main display and the secondary display area are connected to form the curved screen. Based on this example, the side touch area of the mobile phone 100 may be disposed in the secondary display area. For example, FIG. 5(a) to FIG. 5(d) schematic diagrams of a plurality of physical forms of a mobile phone with a foldable display. As shown in FIG. 5(a), a display area on a foldable screen of the mobile phone 100 may include three areas: a first display area 501, a second display area 502, and a third display area 503. The third display area 503 is disposed between the first display area 501 and the second display area 502, and is a foldable area. When the mobile phone 100 is in a folded form, an included angle between the first display area 501 and the second display area 502 is less than or equal to a preset angle. When the third display area 503 is bent or deformed, the third display area 503 may form a side screen, as shown in FIG. 5(b), FIG. 5(c), and FIG. 5(d). Based on this example, the side touch area of the mobile phone 100 may be disposed on the side screen formed by using the third display area 503. In some embodiments, when the included angle between the first display area 501 and the second display area 502 on the foldable screen is different, the mobile phone may form different physical forms, such as a folded form, a half-folded form in which the mobile phone is unfolded to a specific angle, and an unfolded form. It should be understood that in this embodiment of this application, division of the physical forms of the display of the foldable mobile phone and definition of each physical form are not limited. For example, when the mobile phone is in an unfolded form, the mobile phone may be shown in FIG. 5(a) or FIG. 5(b). For example, when the mobile phone is in a half-folded form, the mobile phone may be shown in FIG. 5(c). For example, when the mobile phone is in a folded form, the mobile phone may be shown in FIG. 5(d). In FIG. 5(a) to FIG. 5(d), the mobile phone is folded left and right. In some other embodiments, the mobile phone may alternatively be folded up and down.

Step 102: The mobile phone 100 detects a touch operation performed in the side touch area. The touch operation may include a slide operation, a touch and hold operation, a tap operation, a double tap operation, and the like. The slide operation may include, for example, sliding upwards, sliding downwards, sliding leftwards, and sliding rightwards. The touch and hold operation may include, for example, touch and hold, touch and hold upwards, touch and hold downwards, touch and hold leftwards, or touch and hold rightwards. The side touch area may be a boundary area of the display 194. The boundary area may be a left boundary area, a right boundary area, an upper boundary area, a lower boundary area, or the like. For example, the display 194 may be the curved screen shown in FIG. 4. When the display 194 is a curved screen, the side touch area may be disposed in a left boundary area and/or a right boundary area on the curved screen. When the curved screen includes a main display on a front side of the mobile phone 100 and a secondary display area on a side edge of the mobile phone 100, and the main display and the secondary display area are connected to form the curved screen, the mobile phone 100 may display a first interface on the main display. The secondary display area on the side edge of the mobile phone 100 may be understood as the left boundary area and the right boundary area. In other words, in this case, the side touch area may be disposed in the secondary display area on the side edge of the mobile phone 100. For example, the display 194 may be the foldable display shown in FIG. 5(a) to FIG. 5(d). When the foldable screen mobile phone is in a folded state (for example, a fully folded state or a partially folded state), in other words, the included angle between the first display area 501 and the second display area 502 is less than or equal to the preset angle, the side touch area may be disposed in at least one of the third display area 503, a boundary area of the first display area 501, or a boundary area of the second display area 502. When the foldable screen mobile phone is in an unfolded state, the side touch area is disposed in the boundary area of the first display area 501 and/or the boundary area of the second display area 502.

Step 103: The mobile phone 100 switches the first interface to a second interface for displaying on the display 194 in response to the touch operation. In this application, the second interface and the first interface are different interfaces. The second interface may include a system desktop, a multi-task management interface, or a previous-level interface of the first interface. For example, the first interface and the second interface may be different interfaces of a same application, and the second interface is the previous-level interface of the first interface. For another example, the first interface is an interface of an application, and the second interface is the system desktop or the multi-task management interface. For example, when the display of the mobile phone 100 is a curved screen, the second interface may be displayed by performing switching on the main display on the front side of the mobile phone 100. For another example, when the display of the mobile phone 100 is the foldable screen shown in FIG. 5(a) to FIG. 5(d), the second interface may be displayed by performing switching in the first display area 501 or the second display area 502.

Working procedures of software and hardware of the mobile phone 100 are described below as an example with reference to the interface switching method in this embodiment of this application.

For example, a sensor in the hardware layer of the mobile phone 100 may collect sensor data, for example, after the touch sensor and/or the pressure sensor in the hardware layer detect/detects a touch operation performed by a user in the side touch area, the hardware layer may send data corresponding to the touch operation to the system runtime library layer by using the kernel layer; the system runtime library layer may recognize the data corresponding to the touch operation as a gesture operation (for example, a slide upwards operation, a slide downwards operation, or a touch and hold operation) by using a built-in related processing component and by using an algorithm, and further report the gesture operation to the FWK layer; and after recognizing that the gesture operation is a specific gesture, the FWK layer triggers a gesture use scenario. For example, after the FWK layer recognizes that the gesture operation is a slide upwards gesture, if it is determined that the slide upwards gesture correspondingly triggers returning to a previous-level interface of the current first interface, returning to the previous-level interface is triggered. For another example, after the FWK layer recognizes that the gesture operation is a slide downwards gesture, if it is determined that the slide downwards gesture correspondingly triggers switching to a system desktop, switching to the system desktop is triggered. For still another example, after the FWK layer recognizes that the gesture operation is a touch and hold downwards gesture, if it is determined that the touch and hold downwards gesture correspondingly triggers switching to a multi-task management interface, switching to the multi-task management interface is triggered.

For example, the second interface is a multi-task management interface; in other words, in this case, the mobile phone 100 is switched from the currently displayed first interface to the multi-task management interface. The multi-task management interface may include an application list of at least one application that is currently run by the electronic device in the background and the foreground. After the mobile phone 100 is switched to the multi-task management interface, the mobile phone 100 may further control display of the multi-task management interface by using the touch operation in the side touch area included in the mobile phone 100. For example, when the mobile phone 100 detects a slide operation performed in the side touch area, content of each entry in the application list included in the multi-task management interface is scrolled for displaying on the display 194 in response to the slide operation performed in the side touch area. The application list may include an interface of the at least one application. In this method, the user can quickly find an interface of the application in the application list, and then can quickly switch an application that is run in the foreground or the background.

The foregoing method may be applied to a scenario in which the mobile phone 100 is in a full-screen state, and may also be applied to a scenario in which the mobile phone 100 is in a screen split state. When the mobile phone 100 is in the full-screen state, only one interface is displayed on the display 194 of the mobile phone 100. When the mobile phone 100 is in the screen split state, at least two interfaces may be displayed on the display 194 of the mobile phone 100. The screen of the mobile phone 100 may be split up and down or left and right.

For example, the display 194 of the mobile phone 100 is in the screen split state. The mobile phone 100 displays the first interface in a first area of the display 194, and displays a third interface in a second area of the display 194. In this example, after detecting, in the side touch area, a touch operation used to trigger interface switching, the mobile phone 100 determines whether a touch area in which the touch operation is detected corresponds to the first area or the second area. If the touch area corresponds to the first area, the mobile phone 100 switches the first interface to the second interface for displaying in the first area of the display 194. If the touch area corresponds to the second area, the mobile phone 100 switches the third interface to the second interface for displaying in the second area of the display 194. For example, in a correspondence, if a distance between the touch operation and the first area is less than a distance between the touch operation and the second area, the touch area in which the touch operation is detected corresponds to the first area; or otherwise, if the distance between the touch operation and the first area is greater than the distance between the touch operation and the second area, the touch area in which the touch operation is detected corresponds to the second area.

The following embodiments are mainly described by using an example in which the electronic device is a mobile phone with a foldable display.

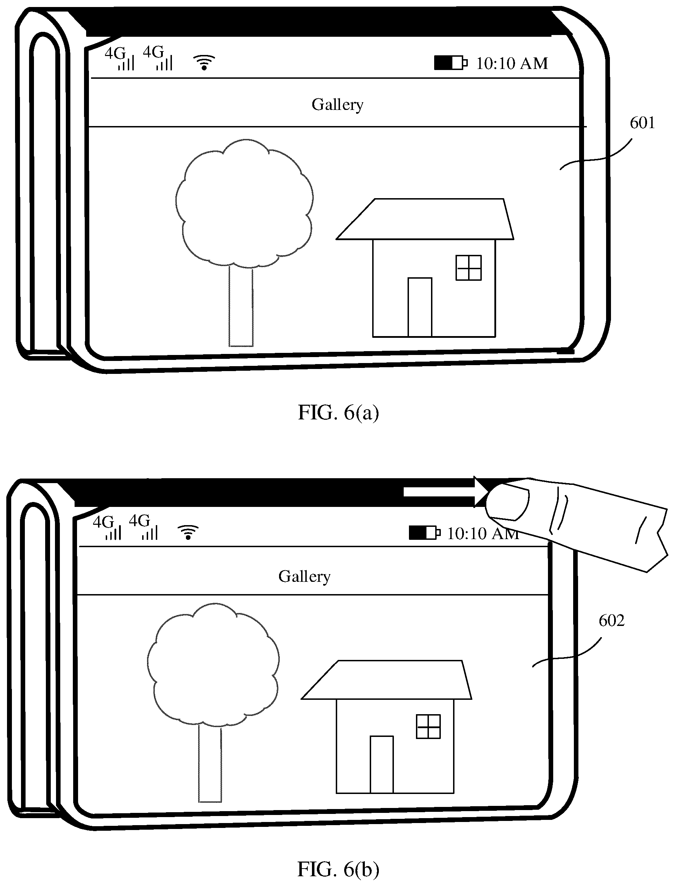

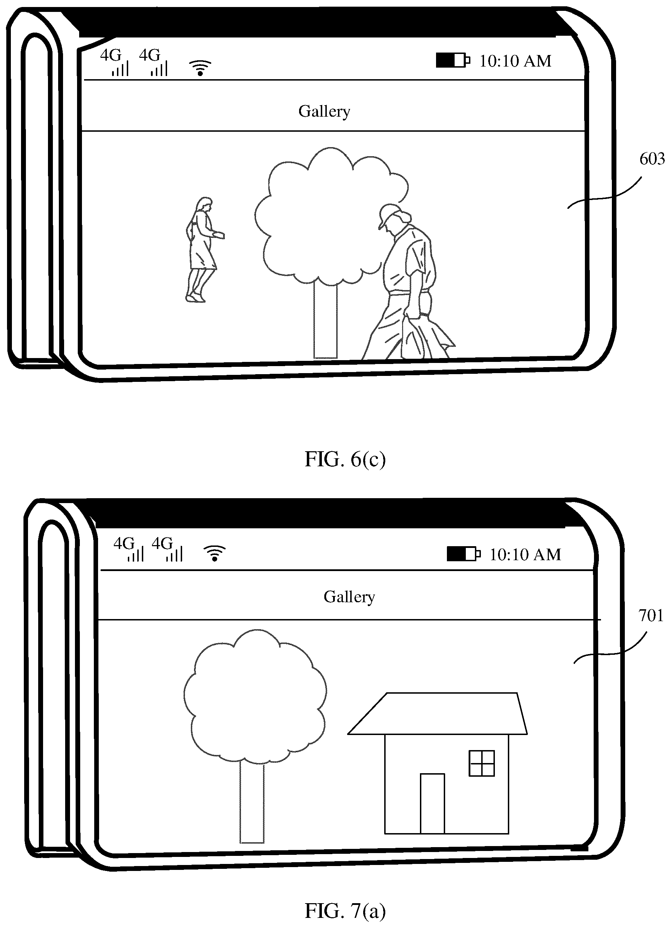

FIG. 6(a) to FIG. 6(c) are a schematic flowchart of an interface switching method according to an embodiment of this application. In FIG. 6(a) to FIG. 6(c), for example, a mobile phone 100 with a foldable display is in a folded state, and a side touch area is a foldable area. Step S601 is shown in FIG. 6(a), and in S601, the mobile phone 100 displays a first interface on a display 194. Step S602 is shown in FIG. 6(b), and in S602, the mobile phone 100 detects a slide rightwards operation in the foldable area. Step S603 is shown in FIG. 6(c), and in S603, the mobile phone 100 switches the first interface to a previous-level interface of the first interface for displaying on the display 194 in response to the slide rightwards operation. It should be noted that, FIG. 6(a) to FIG. 6(c) are described by using a mobile phone that is folded up and down as an example. When the mobile phone 100 is folded left and right and the side touch area is a foldable area, the mobile phone 100 may be configured to be switched from a current interface to a previous-level interface when a slide upwards operation is detected.

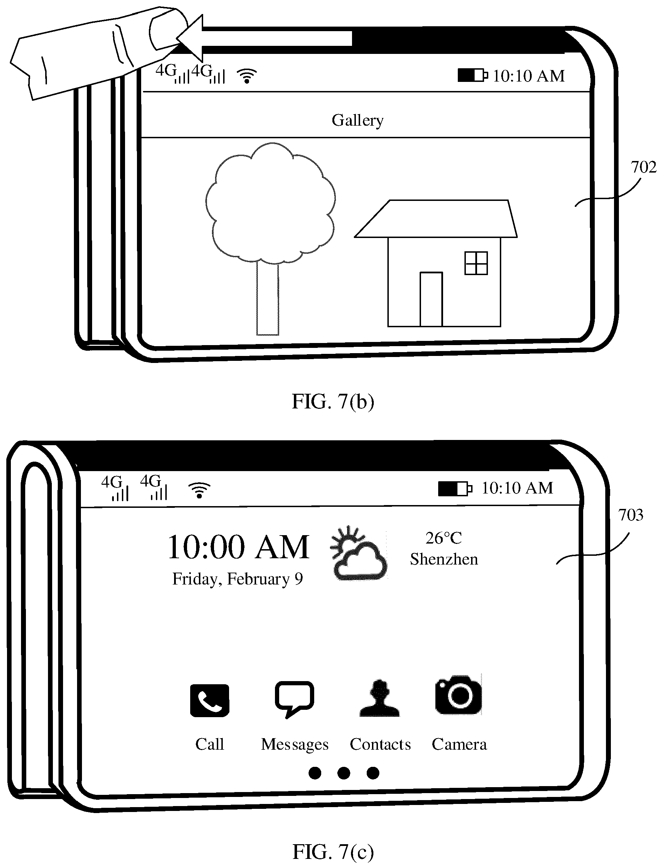

FIG. 7(a) to FIG. 7(c) are a schematic flowchart of an interface switching method according to an embodiment of this application. In FIG. 7(a) to FIG. 7(c), for example, a mobile phone 100 with a foldable display is in a folded state, and a side touch area is a foldable area. Step S701 is shown in FIG. 7(a), and in S701, the mobile phone 100 displays a first interface on a display 194. Step S702 is shown in FIG. 7(b), and in S702, the mobile phone 100 detects a slide leftwards operation in the foldable area. Step S703 is shown in FIG. 7(c), and in S703, the mobile phone 100 switches the first interface to a system desktop for displaying on the display 194 in response to the slide leftwards operation. It should be noted that, FIG. 7(a) to FIG. 7(c) are described by using a mobile phone that is folded up and down as an example. When the mobile phone 100 is folded left and right and the side touch area is a foldable area, the mobile phone 100 may be configured to be switched from a currently displayed interface to the system desktop for displaying when a slide downwards operation is detected.

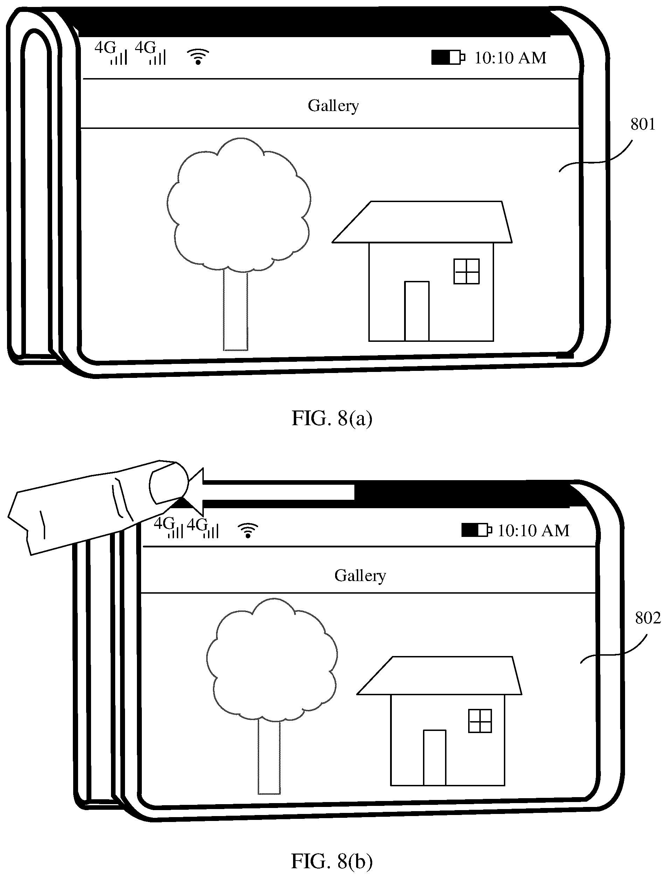

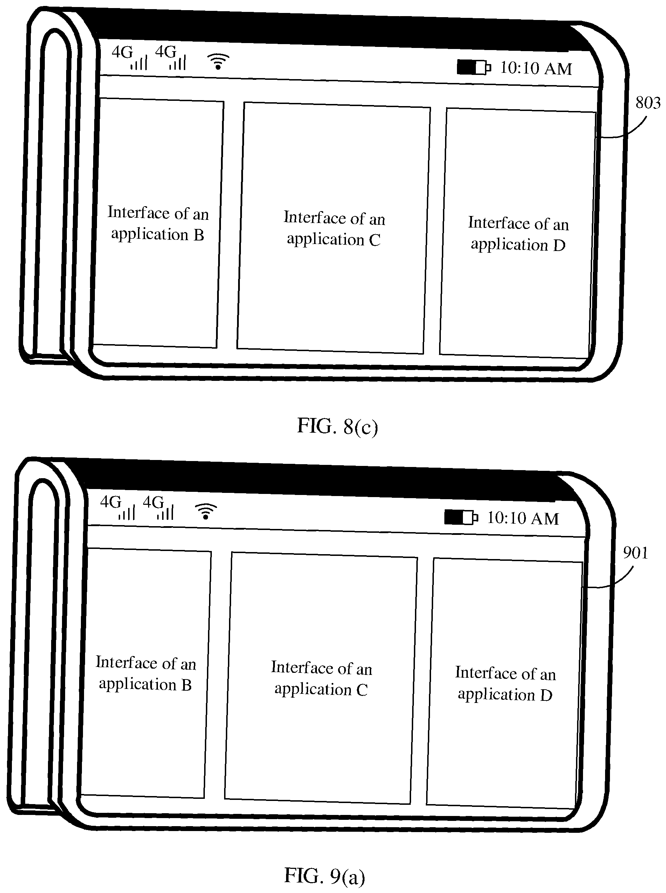

FIG. 8(a) to FIG. 8(c) are a schematic flowchart of an interface switching method according to an embodiment of this application. In FIG. 8(a) to FIG. 8(c), for example, a mobile phone 100 with a foldable display is in a folded state, and a side touch area is a foldable area. Step S801 is shown in FIG. 8(a), and in S801, the mobile phone 100 displays a first interface on a display 194. Step S802 is shown in FIG. 8(b), and in S802, the mobile phone 100 detects a touch and hold leftwards operation in the foldable area. Step S803 is shown in FIG. 8(c), and in S803, the mobile phone 100 switches the first interface to a multi-task management interface for displaying on the display 194 in response to the touch and hold leftwards operation. It should be noted that the mobile phone 100 may alternatively be configured to be switched to the multi-task management interface when detecting a touch and hold rightwards operation. FIG. 8(a) to FIG. 8(c) are described by using a mobile phone that is folded up and down as an example. When the mobile phone 100 is folded left and right and the side touch area is a foldable area, the mobile phone 100 may be configured to be switched from a current interface to the multi-task management interface when a touch and hold downwards operation or a touch and hold upwards operation is detected.

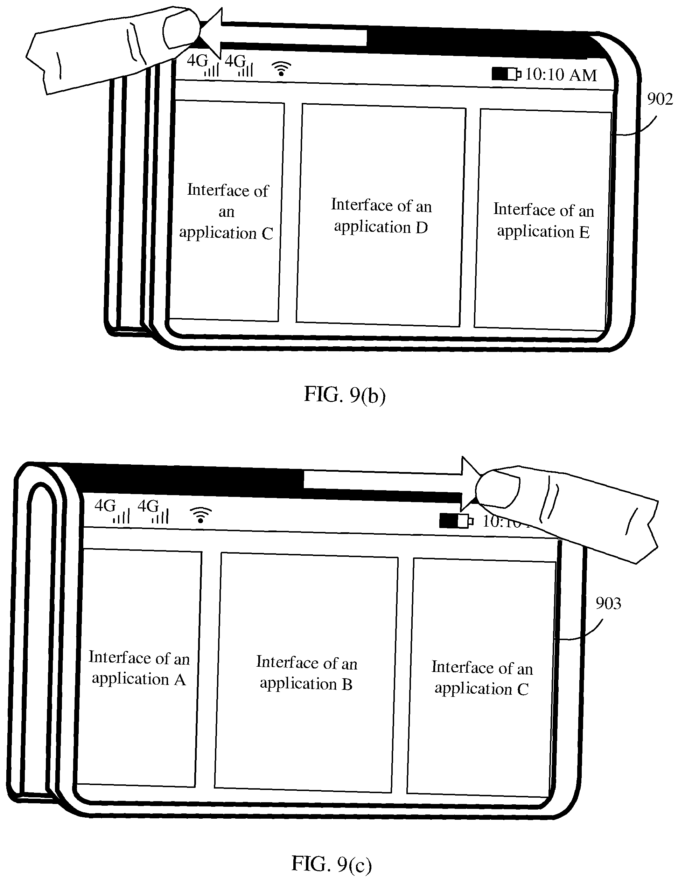

FIG. 9(a) to FIG. 9(c) are a schematic flowchart of an interface switching method according to an embodiment of this application. In FIG. 9(a) to FIG. 9(c), for example, a mobile phone 100 with a foldable display is in a folded state, and a side touch area is a foldable area. Step S901 is shown in FIG. 9(a), and in S901, the mobile phone 100 displays a multi-task management interface on a display 194. Step S902 is shown in FIG. 9(b), and in S902, after detecting a slide leftwards operation in the foldable area, the mobile phone 100 scrolls leftwards to display application interfaces in the multi-task management interface in response to the slide leftwards operation. Step S903 is shown in FIG. 9(c), and in S903, after detecting a slide rightwards operation in the foldable area, the mobile phone 100 scrolls rightwards to display application interfaces in the multi-task management interface in response to the slide rightwards operation. It should be noted that, FIG. 9(a) to FIG. 9(c) are described by using a mobile phone that is folded up and down as an example. When the mobile phone 100 is folded left and right and the side touch area is a foldable area, the mobile phone 100 may be configured to scroll to display application interfaces in the multi-task management interface when a slide downwards operation or a slide upwards operation is detected.

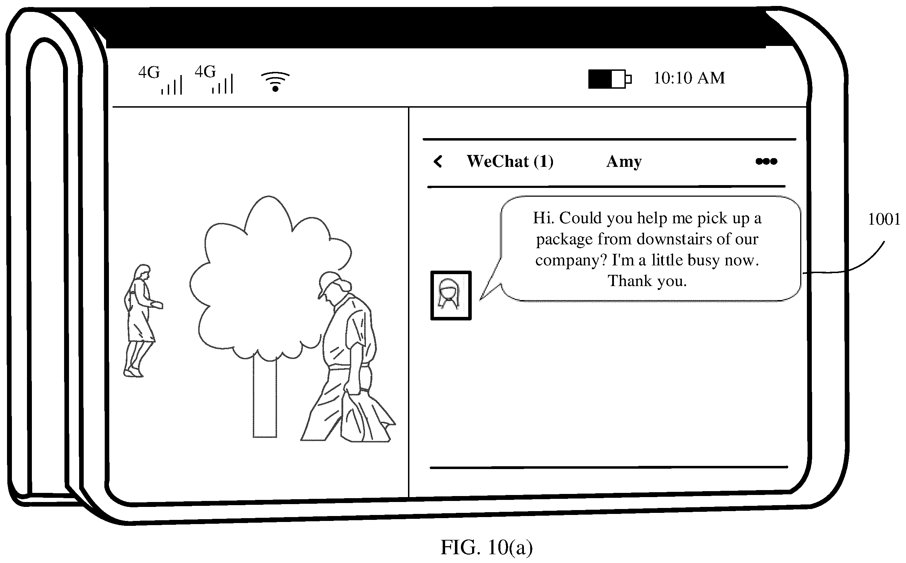

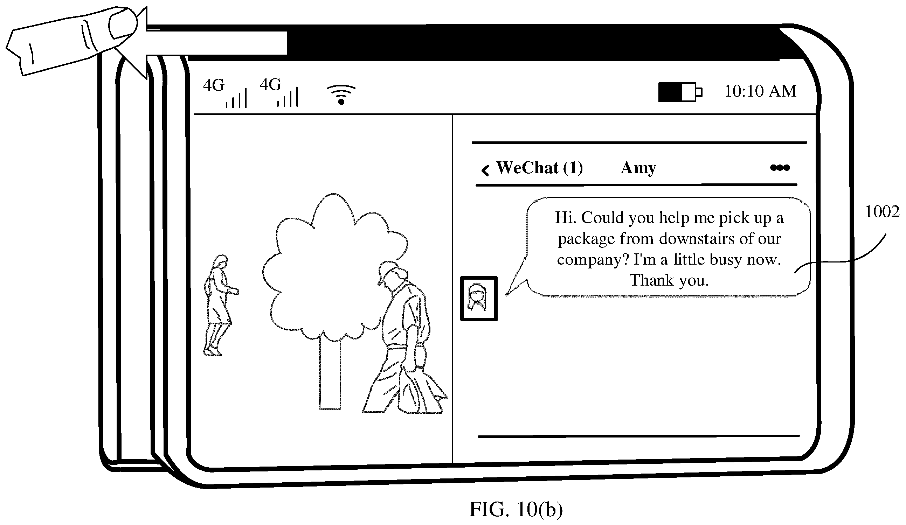

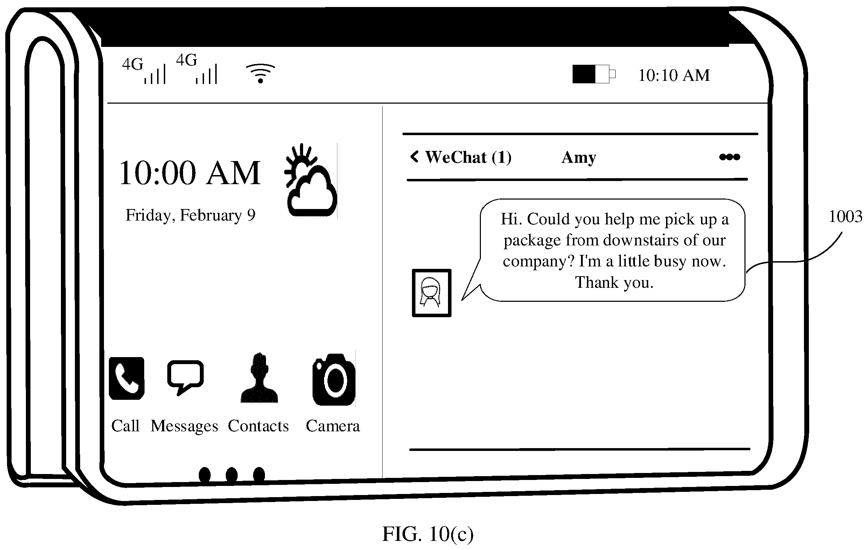

FIG. 10(a) to FIG. 10(c) are a schematic flowchart of an interface switching method according to an embodiment of this application. In FIG. 10(a) to FIG. 10(c), for example, a mobile phone 100 with a foldable display is in a folded state, and a side touch area is a foldable area. Step S1001 is shown in FIG. 10(a), and in S1001, the mobile phone 100 is in a screen split state: A display 194 is split into a left-half screen and a right-half screen, a user interface 1 is displayed on the left-half screen, and a user interface 2 is displayed on the right-half screen. Step S1002 is shown in FIG. 10(b), and in S1002, the mobile phone 100 detects a slide leftwards operation on a left side of the foldable area, and may determine, based on a preset correspondence, that the slide operation corresponds to the left-half screen of the display 194. Step S1003 is shown in FIG. 10(c), and in S1003, the mobile phone 100 switches the user interface 1 displayed on the left-half screen of the display 194 to a system desktop, and the user interface 2 is still displayed on the right-half screen of the display 194.

The interface switching method provided in this application is described from a perspective of interface presentation in FIG. 6(a) to FIG. 6(c) to FIG. 10(a) to FIG. 10(c). The interface switching method provided in this application is described below from a perspective of internal implementation of a mobile phone.

For ease of understanding by a person skilled in the art, concepts involved below are described first.

In this application, from a perspective of internal implementation, each interface in a system corresponds to one activity (Activity), and each application may be understood as including a plurality of activities. When operating an application, a user sometimes needs to invoke a plurality of activities of the application to complete a specific task (Task). A set of a plurality of activities that are invoked to complete a same task forms the task, and a set of a plurality of tasks in an association relationship forms a stack (Stack). For example, for an e-mail application, sending an e-mail may be understood as one task, receiving an e-mail may be understood as one task, and the two tasks may form a stack for the application. For example, the user operates the e-mail application. When the user wants to send an e-mail, the user first enters a home screen of E-mail, where the home screen of E-mail corresponds to one activity 1; and then starts an interface in which e-mail content is filled, where the interface in which the e-mail content is filled corresponds to one activity 2. In addition, an interface including a contact list is further invoked to insert recipient information, and the interface including the contact list corresponds to one activity 3. An interface displayed after the user sends the e-mail corresponds to one activity 4. In this operation process, it may be understood that the activity 1 to the activity 4 form one task 1. For another example, the user operates the e-mail application. When the user wants to view an e-mail, the user first enters a home screen of E-mail, where the home screen of E-mail corresponds to one activity A; and then opens and displays an unread e-mail, where an interface in which the unread email is displayed corresponds to one activity B. In a process in which the user completes e-mail viewing, it may be understood that the activity A and the activity B form one task 2. The task 1 and the task 2 may form one stack.

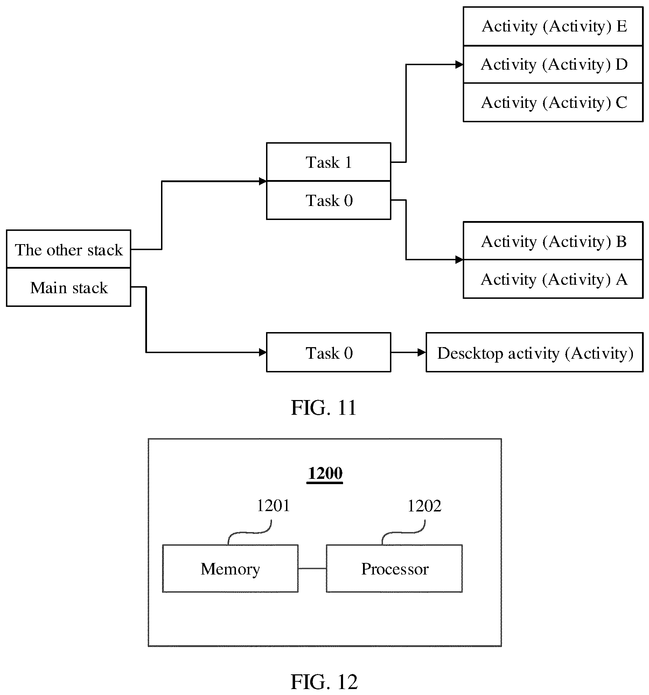

FIG. 11 is a schematic flowchart of an interface switching method according to an embodiment of this application. In FIG. 11, for example, a mobile phone includes two stacks. A main stack is a system-level stack, a task 0 included in the stack may be, for example, returning to a system desktop, and a desktop activity included in the task 0 corresponds to the system desktop. The other stack may be an application-level stack, the stack includes a task 0 and a task 1, the task 0 includes an activity A and an activity B, and the task 1 includes an activity C, an activity D, and an activity E. In FIG. 11, a task that is currently focused on is the task 1 in the other stack, and the task is located at the top of the other stack because the task is being focused on. A currently active activity of the task is the activity E, and an interface currently displayed by the mobile phone is an interface corresponding to the activity E. If the user keeps tapping a return key, activities in the task are cleared from the task according to a last-in first-out principle. When a quantity of activities in a task is 0, the task is cleared from a stack.
1. Based on FIG. 11, if the user slides in a touch area on a display in this case, and triggers switching to a previous-level interface, the activity E is cleared from the task 1, and the activity D becomes a top activity. In this case, the mobile phone displays an interface corresponding to the activity D.
2. Based on FIG. 11, if the user touches and holds a touch area on a display in this case, and triggers switching to the system desktop, sequence switching of the stacks is first triggered, the main stack is switched to a top part, and the other stack is switched to a bottom part. In this case, the task 0 of the main stack is being focused on, and correspondingly, a top activity (namely, the desktop activity) included in the task 0 of the main stack is being focused on. Therefore, the mobile phone displays an interface corresponding to the desktop activity.
3. Based on FIG. 11, if the user slides in a touch area on a display in this case, and triggers switching to a multi-task management interface, a system searches both the stacks for an activity corresponding to the multi-task management interface, and then moves the activity to a top part of a task in which the activity is located, and switches a stack in which the task is located to a top part. Therefore, the mobile phone displays the multi-task management interface.

In the embodiments provided in this application, the method provided in the embodiments of this application is described from a perspective of the electronic device (the mobile phone 100) used as an execution entity. To implement functions in the method provided in the embodiments of this application, a terminal device may include a hardware structure and/or a software module, to implement the functions in a form of a hardware structure, a software module, or a hardware structure and a software module. Whether a function in the foregoing functions is performed by the hardware structure, the software module, or the combination of the hardware structure and the software module depends on specific applications and design constraint conditions of the technical solutions.

Based on a same technical concept, this application further provides an electronic device 1200, configured to perform the methods provided in the foregoing embodiments of this application. As shown in FIG. 12, the electronic device 1200 may include a memory 1201 and a processor 1202. The memory 1201 is configured to store program instructions, and the processor 1202 is configured to invoke the program instructions stored in the memory 1201 to implement the user interface switching method in the embodiments of this application. For example, if the memory 1201 stores program instructions for performing the interface switching method shown in FIG. 3, the processor 1202 invokes the program instructions stored in the memory 1201 for performing the method shown in FIG. 3, to perform the interface switching method shown in FIG. 3.

In this embodiment of this application, the processor 1202 may be a general purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in the embodiments of this application. The general-purpose processor may be a microprocessor, or the processor may be any conventional processor, or the like. The steps of the methods disclosed with reference to the embodiments of this application may be directly performed and completed by a hardware decoding processor, or may be performed and completed by using a combination of hardware and software modules in the decoding processor. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and a processor reads instructions in the memory and completes the steps in the foregoing methods in combination with hardware of the processor.

For related features of a specific implementation of the apparatus, refer to the foregoing method part. Details are not described herein again.

The embodiments of this application may be used separately or in combination with each other, to implement different technical effects.

As described above, the foregoing embodiments are merely used to describe the technical solutions of this application in detail. However, descriptions in the foregoing embodiments are merely used to help understand the methods in the embodiments of this application, and should not be construed as a limitation on the embodiments of this application. Any variation or replacement readily figured out by a person skilled in the art shall fall within the protection scope of the embodiments of this application.

According to the context, the term "when" or "after" used in the foregoing embodiments may be interpreted as a meaning of "if", "after", "in response to determining", or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)". In addition, in the foregoing embodiments, relationship terms such as first and second are used to distinguish one entity from another entity, but do not limit any actual relationship and sequence between these entities.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the processes or functions according to the embodiments of the present invention are completely or partially generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Disk, SSD)), or the like.

It should be noted that a part of the present patent application document includes content protected by the copyright. The copyright owner reserves the copyright except copies made for the patent documents or the recorded content of the patent documents in the Patent Office.

## Claims

1. An interface switching method, applied to an electronic device (100, 1200), wherein the electronic device has a display (194) and a side touch area, and the method comprises:
when a first interface is displayed (101) on the display, detecting (102) a touch operation performed in the side touch area; and
switching (103) the first interface to a second interface for displaying on the display in response to the touch operation;
wherein the display comprises a first display area (501), a second display area (502), and a third display area (503) that are foldable, and the first display area (501) and the second display area (502) are connected in a foldable manner by using the third display area (503);
when the first display area (501) and the second display (502) area are folded to a state in which an included angle is less than or equal to a preset angle, the third display area (503) comprises the side touch area, and the first interface or the second interface obtained after switching is displayed in the first display area (501) or the second display area (502); and
when the electronic device is in an unfolded state, the side touch area is disposed in a boundary area of the first display area (501) and/or a boundary area of the second display area (502).

2. The method according to claim 1, wherein the touch operation comprises a slide operation, a touch and hold operation, a tap operation, or a double tap operation.

3. The method according to claim 1 or 2, wherein the first interface and the second interface are different interfaces of a same application, and the second interface is a previous-level interface of the first interface; or
the first interface is an interface of an application, and the second interface is a system desktop or a multi-task management interface.

4. The method according to claim 3, wherein the second interface is the multi-task management interface, and the multi-task management interface comprises an application list of at least one application that is currently run by the electronic device in the background and the foreground; and
after the switching (103) the first interface to a second interface for displaying on the display, the method further comprises:
detecting a slide operation performed in the side touch area; and
scrolling content of each entry in the application list for displaying on the display in response to the slide operation.

5. The method according to any one of claims 1 to 4, wherein if the display is currently in a screen split state, the first interface is displayed in a first area of the display, and a third interface is displayed in a second area of the display,
the switching (103) the first interface to a second interface for displaying on the display in response to the touch operation comprises:
switching, in the first area, the first interface to the second interface for displaying in response to the touch operation, and keeping the third interface being displayed in the second area.

6. An electronic device (100), comprising:
a display (194) and a side touch area;
one or more processors (110); and
one or more memories (121), wherein
the one or more memories (121) store one or more computer programs, the one or more computer programs comprise instructions, and when the instructions are executed by the one or more processors (110), the electronic device (101) is enabled to perform the following steps:
when a first interface is displayed on the display, detecting (102) a touch operation performed in the side touch area; and
switching (103) the first interface to a second interface for displaying on the display in response to the touch operation;
wherein the display (194) comprises a first display area (501), a second display area (502), and a third display area (503) that are foldable, and the first display area (501) and the second display area (502) are connected in a foldable manner by using the third display area (503);
when the first display area (501) and the second display area (502) are folded to a state in which an included angle is less than or equal to a preset angle, the third display area (503) comprises the side touch area, and the first interface or the second interface obtained after switching is displayed in the first display area (501) or the second display area (502); and
when the electronic device is in an unfolded state, the side touch area is disposed in a boundary area of the first display area (501) and/or a boundary area of the second display area (502).

7. The electronic device (100) according to claim 6, wherein the touch operation comprises a slide operation, a touch and hold operation, a tap operation, or a double tap operation.

8. The electronic device (100) according to claim 6 or 7, wherein the first interface and the second interface are different interfaces of a same application, and the second interface is a previous-level interface of the first interface; or
the first interface is an interface of an application, and the second interface is a system desktop or a multi-task management interface.

9. The electronic device (100) according to claim 8, wherein the second interface is the multi-task management interface, and the multi-task management interface comprises an application list of at least one application that is currently run by the electronic device (100) in the background and the foreground; and
when the instructions are executed by the one or more processors (110), the electronic device (100) is enabled to further perform the following step:
after the first interface is switched to the second interface for displaying on the display (194), if a slide operation performed in the side touch area is detected, scrolling content of each entry in the application list for displaying on the display in response to the slide operation.

10. The electronic device (100) according to any one of claims 6 to 9, wherein if the display (194) is currently in a screen split state, the first interface is displayed in a first area of the display (194), and a third interface is displayed in a second area of the display (194),
when the instructions are executed by the one or more processors (110), the electronic device (100) is enabled to specifically perform the following step:
switching, in the first area, the first interface to the second interface for displaying in response to the touch operation, and keeping the third interface being displayed in the second area.

11. A computer-readable storage medium, wherein the computer-readable storage medium stores a computer program, the computer program comprises program instructions, and when the program instructions are executed by a computer, the computer is enabled to perform the method according to any one of claims 1 to 5.

## Patentansprüche

1. Schnittstellenumschaltverfahren, das auf eine elektronische Vorrichtung (100, 1200) angewendet wird, wobei die elektronische Vorrichtung eine Anzeige (194) und einen seitlichen Berührungsbereich aufweist und das Verfahren Folgendes umfasst:
wenn eine erste Schnittstelle auf der Anzeige dargestellt wird (101), Erkennen (102) einer Berührungsoperation, die in dem seitlichen Berührungsbereich durchgeführt wird; und
Umschalten (103) der ersten Schnittstelle auf eine zweite Schnittstelle zur Darstellung auf der Anzeige in Reaktion auf die Berührungsoperation;
wobei die Anzeige einen ersten Anzeigebereich (501), einen zweiten Anzeigebereich (502) und einen dritten Anzeigebereich (503) umfasst, die faltbar sind, und der erste Anzeigebereich (501) und der zweite Anzeigebereich (502) durch Verwenden des dritten Anzeigebereichs (503) faltbar verbunden sind;
wenn der erste Anzeigebereich (501) und der zweite Anzeigebereich (502) in einen Zustand gefaltet werden, in dem ein eingeschlossener Winkel kleiner als oder gleich einem voreingestellten Winkel ist, der dritte Anzeigebereich (503) den seitlichen Berührungsbereich umfasst, und die erste Schnittstelle oder die zweite Schnittstelle, die nach dem Umschalten erhalten werden, in dem ersten Anzeigebereich (501) oder dem zweien Anzeigebereich (502) dargestellt werden; und,
wenn die elektronische Vorrichtung in einem ungefalteten Zustand ist, der seitliche Berührungsbereich in einem Randbereich des ersten Anzeigebereichs (501) und/oder einem Randbereich des zweiten Anzeigebereichs (502) angeordnet ist.

2. Verfahren nach Anspruch 1, wobei die Berührungsoperation eine Wischoperation, eine Berühren-und-Halten-Operation, eine Tippoperation oder eine Doppeltippoperation umfasst.

3. Verfahren nach Anspruch 1 oder 2, wobei die erste Schnittstelle und die zweite Schnittstelle verschiedene Schnittstellen einer gleichen Anwendung sind und die zweite Schnittstelle eine Schnittstelle auf einer vorherigen Ebene der ersten Schnittstelle ist; oder
die erste Schnittstelle eine Schnittstelle einer Anwendung ist und die zweite Schnittstelle ein Systemdesktop oder eine Mehrfachaufgaben-Verwaltungsschnittstelle ist.

4. Verfahren nach Anspruch 3, wobei die zweite Schnittstelle die Mehrfachaufgaben-Verwaltungsschnittstelle ist und die Mehrfachaufgaben-Verwaltungsschnittstelle eine Anwendungsliste mindestens einer Anwendung umfasst, die von der elektronischen Vorrichtung gegenwärtig im Hintergrund oder Vordergrund ausgeführt wird; und
wobei das Verfahren nach dem Umschalten (103) der ersten Schnittstelle auf eine zweite Schnittstelle zur Darstellung auf der Anzeige ferner Folgendes umfasst:
Erkennen einer Wischoperation, die in dem Wischberührungsbereich durchgeführt wird; und
Scrollen des Inhalts jedes Eintrags in der Anwendungsliste zur Darstellung auf der Anzeige in Reaktion auf die Wischoperation.

5. Verfahren nach einem der Ansprüche 1 bis 4, wobei, falls die Anzeige gegenwärtig in einem geteilten Bildschirmzustand ist, die erste Schnittstelle in einem ersten Bereich der Anzeige dargestellt wird und eine dritte Schnittstelle in einem zweiten Bereich der Anzeige dargestellt wird,
wobei das Umschalten (103) der ersten Schnittstelle auf eine zweite Schnittstelle zur Darstellung auf der Anzeige in Reaktion auf die Berührungsoperation Folgendes umfasst:
Umschalten der ersten Schnittstelle im ersten Bereich auf die zweite Schnittstelle zur Darstellung in Reaktion auf die Berührungsoperation und Beibehalten der dritten Schnittstelle, die im zweiten Bereich dargestellt wird.

6. Elektronische Vorrichtung (100), umfassend:
eine Anzeige (194) und einen seitlichen Berührungsbereich;
einen oder mehrere Prozessoren (110); und
einen oder mehrere Speicher (121), wobei
der eine oder die mehreren Speicher (121) ein oder mehrere Computerprogramme speichern, das eine oder die mehreren Computerprogramme Anweisungen umfassen und, wenn die Anweisungen von dem einen oder den mehreren Prozessoren (110) ausgeführt werden, die elektronische Vorrichtung (101) in der Lage ist, die folgenden Schritte auszuführen:
wenn die erste Schnittstelle auf der Anzeige dargestellt wird, Erkennen (102) einer Berührungsoperation, die in dem seitlichen Berührungsbereich durchgeführt wird; und
Umschalten (103) der ersten Schnittstelle auf eine zweite Schnittstelle zur Darstellung auf der Anzeige in Reaktion auf die Berührungsoperation;
wobei die Anzeige (194) einen ersten Anzeigebereich (501), einen zweiten Anzeigebereich (502) und einen dritten Anzeigebereich (503) umfasst, die faltbar sind, und der erste Anzeigebereich (501) und der zweite Anzeigebereich (502) durch Verwenden des dritten Anzeigebereichs (503) faltbar verbunden sind;
wenn der erste Anzeigebereich (501) und der zweite Anzeigebereich (502) in einen Zustand gefaltet werden, in dem ein eingeschlossener Winkel kleiner als oder gleich einem voreingestellten Winkel ist, der dritte Anzeigebereich (503) den seitlichen Berührungsbereich umfasst, und die erste Schnittstelle oder die zweite Schnittstelle, die nach dem Umschalten erhalten werden, in dem ersten Anzeigebereich (501) oder dem zweiten Anzeigebereich (502) dargestellt werden; und,
wenn die elektronische Vorrichtung in einem ungefalteten Zustand ist, der seitliche Berührungsbereich in einem Randbereich des ersten Anzeigebereichs (501) und/oder einem Randbereich des zweiten Anzeigebereichs (502) angeordnet ist.

7. Elektronische Vorrichtung (100) nach Anspruch 6, wobei die Berührungsoperation eine Wischoperation, eine Berühren-und-Halten-Operation, eine Tippoperation oder eine Doppeltippoperation umfasst.

8. Elektronische Vorrichtung (100) nach Anspruch 6 oder 7, wobei die erste Schnittstelle und die zweite Schnittstelle verschiedene Schnittstellen einer gleichen Anwendung sind und die zweite Schnittstelle eine Schnittstelle auf einer vorherigen Ebene der ersten Schnittstelle ist; oder
die erste Schnittstelle eine Schnittstelle einer Anwendung ist und die zweite Schnittstelle ein Systemdesktop oder eine Mehrfachaufgaben-Verwaltungsschnittstelle ist.

9. Elektronische Vorrichtung (100) nach Anspruch 8, wobei die zweite Schnittstelle die Mehrfachaufgaben-Verwaltungsschnittstelle ist und die Mehrfachaufgaben-Verwaltungsschnittstelle eine Anwendungsliste mindestens einer Anwendung umfasst, die gegenwärtig von der elektronischen Vorrichtung (100) im Hintergrund oder Vordergrund ausgeführt wird; und,
wenn die Anweisungen von dem einen oder den mehreren Prozessoren (110) ausgeführt werden, die elektronische Vorrichtung (100) in der Lage ist, den folgenden Schritt auszuführen:
nach dem Umschalten der ersten Schnittstelle auf die zweite Schnittstelle zur Darstellung auf der Anzeige (194), falls erkannt wird, dass eine Wischoperation in dem seitlichen Berührungsbereich durchgeführt wird, Scrollen des Inhalts jedes Eintrags in der Anwendungsliste zur Darstellung auf der Anzeige in Reaktion auf die Wischoperation.

10. Elektronische Vorrichtung (100) nach einem der Ansprüche 6 bis 9, wobei, falls die Anzeige (194) gegenwärtig in einem geteilten Bildschirmzustand ist, die erste Schnittstelle in einem ersten Bereich der Anzeige (194) dargestellt wird und eine dritte Schnittstelle in einem zweiten Bereich der Anzeige (194) dargestellt wird,
wenn die Anweisungen von dem einen oder den mehreren Prozessoren (110) ausgeführt werden, die elektronische Vorrichtung (100) in der Lage ist, insbesondere den folgenden Schritt auszuführen:
Umschalten der ersten Schnittstelle im ersten Bereich auf die zweite Schnittstelle zur Darstellung in Reaktion auf die Berührungsoperation und Beibehalten der dritten Schnittstelle, die im zweiten Bereich dargestellt wird.

11. Computerlesbares Speichermedium, wobei das computerlesbare Speichermedium ein Computerprogramm speichert, das Computerprogramm Programmanweisungen umfasst und, wenn die Programmanweisungen von einem Computer ausgeführt werden, der Computer zum Durchführen des Verfahrens nach einem der Ansprüche 1 bis 5 in der Lage ist.

## Revendications

1. Procédé de commutation d'interface, appliqué à un dispositif électronique (100, 200), le dispositif électronique comportant un dispositif d'affichage (194) et une région tactile latérale, et le procédé comprenant les étapes consistant à :
lorsqu'une première interface est affichée (101) sur le dispositif d'affichage, détecter (102) une opération tactile effectuée sur la région tactile latérale ; et
commuter (103) de la première interface vers une deuxième interface pour l'affichage sur le dispositif d'affichage en réponse à l'opération tactile ;
dans lequel le dispositif d'affichage comprend une première région d'affichage (501), une deuxième région d'affichage (502) et une troisième région d'affichage (503) qui sont pliables, et la première région d'affichage (501) et la deuxième région d'affichage (502) sont connectées de manière pliable au moyen de la troisième région d'affichage (503) ;
lorsque la première région d'affichage (501) et la deuxième région d'affichage (502) sont pliées pour passer dans un état dans lequel un angle inclus est inférieur ou égal à un angle prédéfini, la troisième région d'affichage (503) comprend la région tactile latérale, et la première interface ou la deuxième interface obtenue après la commutation est affichée dans la première région d'affichage (501) ou la deuxième région d'affichage (502) ; et
lorsque le dispositif électronique est dans un état déplié, la région tactile latérale est disposée dans une région frontière de la première région d'affichage (501) et/ou une région frontière de la deuxième région d'affichage (502).

2. Procédé selon la revendication 1, dans lequel l'opération tactile comprend une opération de glissement, une opération d'appui et de maintien, une opération d'appui bref ou une opération de double appui.

3. Procédé selon la revendication 1 ou 2, dans lequel la première interface et la deuxième interface sont des interfaces différentes d'une même application, et la deuxième interface est une interface de niveau précédent de la première interface ; ou la première interface est une interface d'une application, et la deuxième interface est un bureau système ou une interface de gestion multitâche.

4. Procédé selon la revendication 3, dans lequel la deuxième interface est l'interface de gestion multitâche, et l'interface de gestion multitâche comprend une liste d'applications d'au moins une application qui est actuellement en cours d'exécution par le dispositif électronique sur l'arrière-plan et l'avant-plan ; et
après la commutation (103) de la première interface vers une deuxième interface pour l'affichage sur le dispositif d'affichage, le procédé comprend également les étapes consistant à :
détecter une opération de glissement effectuée dans la région tactile latérale ; et
faire défiler le contenu de chaque entrée de la liste d'applications pour l'affichage sur le dispositif d'affichage en réponse à l'opération de glissement.

5. Procédé selon l'une quelconque des revendications 1 à 4, dans lequel, si le dispositif d'affichage est actuellement dans un état d'écran partagé, la première interface est affichée dans une première région du dispositif d'affichage, et une troisième interface est affichée dans une deuxième région du dispositif d'affichage,
la commutation (103) de la première interface vers une deuxième interface pour l'affichage sur le dispositif d'affichage en réponse à l'opération tactile comprend l'étape consistant à :
commuter, dans la première région, de la première interface vers la deuxième interface pour l'affichage en réponse à l'opération tactile, et laisser la troisième interface affichée dans la deuxième région.

6. Dispositif électronique (100), comprenant :
un dispositif d'affichage (194) et une région tactile latérale ;
un ou plusieurs processeurs (110) ; et
une ou plusieurs mémoires (121), dans lequel
les une ou plusieurs mémoires (121) stockent un ou plusieurs programmes informatiques, les un ou plusieurs programmes informatiques comprennent des instructions, et lorsque les instructions sont exécutées par les un ou plusieurs processeurs (110), le dispositif électronique (101) est activé pour effectuer les étapes suivantes :
lorsqu'une première interface est affichée sur le dispositif d'affichage, détecter (102) une opération tactile effectuée sur la région tactile latérale ; et
commuter (103) de la première interface vers une deuxième interface pour l'affichage sur le dispositif d'affichage en réponse à l'opération tactile ;
dans lequel le dispositif d'affichage (194) comprend une première région d'affichage (501), une deuxième région d'affichage (502) et une troisième région d'affichage (503) qui sont pliables, et la première région d'affichage (501) et la deuxième région d'affichage (502) sont connectées de manière pliable au moyen de la troisième région d'affichage (503) ;
lorsque la première région d'affichage (501) et la deuxième région d'affichage (502) sont pliées pour passer dans un état dans lequel un angle inclus est inférieur ou égal à un angle prédéfini, la troisième région d'affichage (503) comprend la région tactile latérale, et la première interface ou la deuxième interface obtenue après la commutation est affichée dans la première région d'affichage (501) ou la deuxième région d'affichage (502) ; et
lorsque le dispositif électronique est dans un état déplié, la région tactile latérale est disposée dans une région frontière de la première région d'affichage (501) et/ou une région frontière de la deuxième région d'affichage (502).

7. Dispositif électronique (100) selon la revendication 6, dans lequel l'opération tactile comprend une opération de glissement, une opération d'appui et de maintien, une opération d'appui bref ou une opération de double appui.

8. Dispositif électronique (100) selon la revendication 6 ou 7, dans lequel la première interface et la deuxième interface sont des interfaces différentes d'une même application, et la deuxième interface est une interface de niveau précédent de la première interface ; ou
la première interface est une interface d'une application, et la deuxième interface est un bureau système ou une interface de gestion multitâche.

9. Dispositif électronique (100) selon la revendication 8, dans lequel la deuxième interface est l'interface de gestion multitâche, et l'interface de gestion multitâche comprend une liste d'applications d'au moins une application qui est actuellement en cours d'exécution par le dispositif électronique (100) sur l'arrière-plan et l'avant-plan ; et
lorsque les instructions sont exécutées par les un ou plusieurs processeurs (110), le dispositif électronique (100) est activé pour effectuer également l'étape suivante :
après la commutation de la première interface vers la deuxième interface pour l'affichage sur le dispositif d'affichage (194), si une opération de glissement effectuée dans la région tactile latérale est détectée, faire défiler le contenu de chaque entrée de la liste d'applications pour l'affichage sur le dispositif d'affichage en réponse à l'opération de glissement.

10. Dispositif électronique (100) selon l'une quelconque des revendications 6 à 9, dans lequel, si le dispositif d'affichage (194) est actuellement dans un état d'écran partagé, la première interface est affichée dans une première région du dispositif d'affichage (194), et une troisième interface est affichée dans une deuxième région du dispositif d'affichage (194),
lorsque les instructions sont exécutées par les un ou plusieurs processeurs (110), le dispositif électronique (100) est activé pour effectuer spécifiquement l'étape suivante :
commuter, dans la première région, de la première interface vers la deuxième interface pour l'affichage en réponse à l'opération tactile, et laisser la troisième interface affichée dans la deuxième région.

11. Support de stockage lisible par ordinateur, le support de stockage lisible par ordinateur stockant un programme informatique, le programme informatique comprenant des instructions de programme, et lorsque les instructions de programme sont exécutées par un ordinateur, l'ordinateur est activé pour réaliser le procédé selon l'une quelconque des revendications 1 à 5.
